# EUROPÄISCHE PATENTANMELDUNG

(11) **EP 3 868 532 A1**
(43) Veröffentlichungstag der Anmeldung: **25.08.2021**
(21) Anmeldenummer: 20212211.5
(22) Anmeldetag: 07.12.2020
(51) Int. Cl.: B29B 7/24, B29B 7/18, B29B 7/74, B29B 7/28, B29C 48/28

(54) **VORRICHTUNG UND VERFAHREN ZUM MISCHEN VON KAUTSCHUKMISCHUNGEN, SOWIE ENTSPRECHENDE VERWENDUNGEN**

(30) Priorität: 21.02.2020 DE 102020202248
(71) Anmelder: Continental Reifen Deutschland GmbH, 30165 Hannover (DE)
(72) Erfinder: Lopes, Ricardo Gaspar André, 30419 Hannover (DE); Kuck, Detlef, 30419 Hannover (DE); Busteed, Simon, 30419 Hannover (DE)
(74) Vertreter: Continental Corporation

(57) **Zusammenfassung**

Vorrichtung und Verfahren zum Mischen von Kautschukmischungen, umfassend zumindest eine erste Mischkammer (2) der einen oder mehr als einen Mischkammern der Vorrichtung (1), wobei die erste Mischkammer (2) von einem Kammergehäuse (3), einer Einwurföffnung (4) und einer Auswurfsöffnung (5) begrenzt wird, einen Beschickungsschacht (6) zum Beschicken der ersten Mischkammer (2), wobei der Beschickungsschacht (6) mindestens eine Beschickungsöffnung (7) zum Beschicken von Kautschukmischungsbestandteilen aufweist, und eine Stempeleinheit (8) zum Schließen der Einwurföffnung (4), wobei die Stempeleinheit (8) verschiebbar innerhalb des Beschickungsschachts (6) angeordnet ist, wobei die Stempeleinheit (8) eine oder mehrere Aussparungen (9) aufweist, wobei die eine oder eine der mehreren Aussparungen (9) dazu eingerichtet sind, dass durch die Aussparungen (9) hindurch Füllstoffe (13) in die erste Mischkammer (2) überführt werden können, während die unteren Kanten (10) der Stempeleinheit (8) unterhalb der mindestens einen Beschickungsöffnung (7) des Beschickungsschachts (6) angeordnet sind.

## Beschreibung

Die Erfindung betrifft eine Vorrichtung zum Mischen von Kautschukmischungen, umfassend zumindest eine erste Mischkammer der einen oder mehr als einen Mischkammern der Vorrichtung.
Die Erfindung betrifft auch ein Verfahren zum Mischen von Kautschukmischungen und Verwendungen der Vorrichtung.

Mischer zur Herstellung von Kautschukmischungen sind hinlänglich bekannt. Die einzelnen Kautschukmischungsbestandteile werden üblicherweise durch einen Beschickungsschacht einem Mischer hinzugeführt. Beim Mischen Kautschukmischungen tritt jedoch häufig der Fall ein, dass weniger Füllstoff als ursprünglich abgewogen in der finalen Kautschukmischung eingemischt wird. Die damit verbundenen Abweichungen haben negative Auswirkungen auf die Qualität der entstehenden Kautschukmischung. Gründe für den fehlenden Füllstoff sind beispielsweise das Luftabzugssystem in dem Beschickungsschacht oder die Rotation der Rotoren in der Mischkammer, bei der Füllstoffe aufgewirbelt werden und somit verloren gehen.

Eine Aufgabe, die der Erfindung zugrunde liegt, besteht darin, eine Vorrichtung zum Mischen von Kautschukmischungen bereitzustellen, bei der die Menge an Füllstoff zuverlässiger in der resultierenden Kautschukmischung genauer eingestellt werden kann.

Gelöst wird diese Aufgabe erfindungsgemäß durch eine Vorrichtung zum Mischen von Kautschukmischungen, umfassend
- zumindest eine erste Mischkammer der einen oder mehr als einen Mischkammern der Vorrichtung, wobei die erste Mischkammer von einem Kammergehäuse, einer Einwurföffnung und einer Auswurfsöffnung begrenzt wird,
- einen Beschickungsschacht zum Beschicken der ersten Mischkammer, wobei der Beschickungsschacht mindestens eine Beschickungsöffnung zum Beschicken von Kautschukmischungsbestandteilen aufweist,
und
- eine Stempeleinheit zum Schließen der ersten Einwurföffnung, wobei die Stempeleinheit verschiebbar innerhalb des Beschickungsschachtes angeordnet ist,
dadurch gekennzeichnet, dass
die Stempeleinheit eine oder mehrere Aussparungen aufweist, wobei die eine oder eine der mehreren Aussparungen dazu eingerichtet sind, dass durch die Aussparungen hindurch Füllstoffe in die erste Mischkammer überführt werden können, während die unteren Kanten der Stempeleinheit unterhalb der mindestens einen Beschickungsöffnung des Beschickungsschachts, d.h. unterhalb jeder Beschickungsöffnung des Beschickungsschachtes, angeordnet sind. Bevorzugt umfasst der Beschickungsschacht dabei keine weiteren Öffnungen unterhalb der mindestens einen Beschickungsöffnung.

Überraschenderweise wurde im Rahmen der vorliegenden Erfindung herausgefunden, dass das Befüllen mit Füllstoff in eine Mischkammer durch die Stempeleinheit einer erfindungsgemäßen Vorrichtung präzise durchgeführt werden kann, wenn der Füllstoff in die erste Mischkammer der erfindungsgemäßen Vorrichtung gefüllt wird, während die Stempeleinheit die Einwurföffnung der ersten Mischkammer schließt. Die Stempeleinheit einer erfindungsmäßen Vorrichtung schließt die Einwurföffnung der ersten Mischkammer dann, wenn die Stempeleinheit in dem Beschickungsschacht so weit nach unten verschoben wurde, dass kein Stoffaustausch mehr zwischen der mindestens einen Beschickungsöffnung des Beschickungsschachtes, d.h. zwischen jeder Beschickungsöffnung des Beschickungsschachtes, und der Einwurföffnung der ersten Mischkammer mehr stattfinden kann. Gemäß der vorliegenden Erfindung soll zumindest ein Teil des, bevorzugt sämtlicher, Stoffaustausches, d.h. des Austausch von Füllstoff, ausschließlich durch die eine oder die mehreren Aussparungen in der Stempeleinheit eine erfindungsgemäße Vorrichtung geschehen. Dies ermöglicht ein präzises Hinzudosieren von Füllstoffen und somit einen enormen technischen Vorteil gegenüber den im Stand der Technik bekannten Vorrichtungen, bei denen ein Verlust von Füllstoffen bisher unvermeidbar war.

Ein weiterer besonderer Vorteil der vorliegenden Erfindung ist, dass mittels einer oder mehreren Aussparungen in der Stempeleinheit einer erfindungsgemäßen Vorrichtung ein Druckausgleich zwischen dem Innendruck des Beschickungsschachtes und dem Innendruck der ersten Mischkammer erfolgen kann, bevor der Stempel die Einwurföffnung der ersten Mischkammer schließt oder auch öffnet. Bei diesem Schließen oder öffnen kommt es häufig zu dem besagten Verlusten von Füllstoff in herkömmlichen Vorrichtungen zum Mischen von Kautschukmischungen. Das Auf- und Abfahren der Stempeleinheit und somit auch das Öffnen und Schließen der Einwurföffnung während des Mischens einer Kautschukmischung in der ersten Mischkammer ist aus verschiedenen Gründen unvermeidbar.

Bevorzugt ist eine erfindungsgemäße Vorrichtung wie vorstehend beschrieben oder wie vorstehend als bevorzugt beschrieben, wobei die eine oder eine der mehreren Aussparungen dazu eingerichtet sind, dass durch die Aussparungen hindurch Füllstoffe in die erste Mischkammer überführt werden können und dies nicht nur während die unteren Kanten der Stempeleinheit unterhalb der mindestens einen Beschickungsöffnung des Beschickungsschachts sind, sondern während die Stempeleinheit die Einwurföffnung der ersten Mischkammer schließt.

Bevorzugt ist eine erfindungsgemäße Vorrichtung wie vorstehend beschrieben oder wie vorstehend als bevorzugt beschrieben, wobei die Stempeleinheit mehrere planare Wandflächen aufweist, wobei bevorzugt die Seitenwände der Stempeleinheit planar sind und besonders bevorzugt die Unterwand der Stempeleinheit spiegelsymmetrisch ausgeformt ist.

Bevorzugt ist eine erfindungsgemäße Vorrichtung wie vorstehend beschrieben oder wie vorstehend als bevorzugt beschrieben, wobei die eine oder die mehreren Aussparungen Durchgangslöcher sind.

Ein Vorteil des vorstehend beschriebenen Aspekts der vorliegenden Erfindung ist, dass ein möglichst schneller und ein ständig möglicher Druckausgleich zwischen den Innendruck der ersten Mischkammer und den Innendruck des Beschickungsschachtes möglich ist.

Bevorzugt ist eine erfindungsgemäße Vorrichtung wie vorstehend beschrieben oder wie vorstehend als bevorzugt beschrieben, wobei die Vorrichtung zusätzlich
- eine weitere unterhalb der ersten Mischkammer angeordnete Mischkammer und/oder
- einen, zwei oder mehr als zwei Rotoren zum Mischen einer Kautschukmischung innerhalb der ersten Mischkammer
und/oder
- einen, zwei oder mehr als zwei Rotoren zum Mischen einer Kautschukmischung innerhalb einer der weiteren Mischkammern
umfasst.
Ein Vorteil des vorstehend beschriebenen Aspekts der vorliegenden Erfindung ist, dass die besagte Stempeleinheit insbesondere die Zykluszeit bei einem Tandemmischer wie vorstehend beschrieben verkürzt, insbesondere weil in der oberen ersten Mischkammer mit Stempel der Füllstoff beim Tandemmischen eingefüllt wird.

Bevorzugt ist eine erfindungsgemäße Vorrichtung wie vorstehend beschrieben oder wie vorstehend als bevorzugt beschrieben, wobei die eine oder die mehreren Aussparungen jeweils eine Eingangsöffnung und jeweils mindestens eine Ausgangsöffnung aufweisen, wobei die Eingangsöffnung einer jeden Aussparung bevorzugt an der der ersten Mischkammer abgewandten Wandfläche der Stempeleinheit angeordnet ist und die mindestens eine Ausgangsöffnung einer jeden Aussparung besonders bevorzugt an der der ersten Mischkammer zugewandten Wandfläche der Stempeleinheit angeordnet ist, wobei bevorzugt jede Aussparung
- eine Schraube zum Befördern eines Füllstoffes in die Mischkammer und/oder
- eine Belüftungsmittel, wie beispielsweise ein Wirbelbett,
umfasst. Des Weiteren ist es möglich, dass die Innenwände der Aussparungen mittels aus dem Stand der Technik bekannten Vibrationseinheiten in Vibration versetzt werden und somit ein Transport der Füllstoffe durch die Aussparungen ermöglicht wird.

Ein Vorteil des vorstehend beschriebenen Aspekts der vorliegenden Erfindung ist, dass ein vollständiges Überführen der Füllstoffe in die erste Mischkammer garantiert werden kann.

Bevorzugt ist eine erfindungsgemäße Vorrichtung wie vorstehend beschrieben oder wie vorstehend als bevorzugt beschrieben, wobei die eine Aussparung oder die eine der mehrere Aussparungen der Stempeleinheit mindestens eine mit Kammer zum vorübergehenden Auffangen von Füllstoffen umfasst.

Ein Vorteil des vorstehend beschriebenen Aspekts der vorliegenden Erfindung ist, dass durch die vorstehend beschriebene Kammer in der Stempeleinheit einer erfindungsgemäßen Vorrichtung Füllstoff noch langsamer und somit verlustfreier in die erste Mischkammer überführt werden kann. Eine vorstehend beschriebene Kammer in einer erfindungsgemäßen Vorrichtung ermöglicht zudem, dass Füllstoff in die erste Mischkammer überführt werden kann, ohne dass jemals eine räumlich Verbindung zwischen der ersten Mischkammer und dem Beschickungsschacht entsteht. Hierfür können beispielsweise die nachstehend beschriebenen Schließeinheiten für die Eingangsöffnung und die Ausgangsöffnung der Aussparung umfassend die Kammer eingesetzt werden.

Bevorzugt ist eine erfindungsgemäße Vorrichtung wie vorstehend beschrieben oder wie vorstehend als bevorzugt beschrieben, wobei die Vorrichtung eine oder mehrere Wiegekammern mit Waagen zum Wiegen von Füllstoffen aufweist, wobei jede Wiegekammern bevorzugt mit mindestens einer Eingangsöffnung einer Aussparung in der Stempeleinheit verbunden ist und/oder Transportmittel umfasst, welche dazu eingerichtet sind, Füllstoffe von der Wiegefläche einer Waage einer Wiegekammer durch eine Aussparung der Stempeleinheit in die erste Mischkammer zu transportieren. Die vorstehend beschriebenen Wiegekammern können dabei auch die zuvor beschriebenen Kammern zum vorübergehenden auffangen von Füllstoff darstellen.

Ein Vorteil des vorstehend beschriebenen Aspekts der vorliegenden Erfindung ist, dass die kleinen Mengen an Füllstoff in der Wiegekammer besser abgewogen und dosiert werden können als die großen Mengen, die üblicherweise in den im Stand der Technik bekannten Vorrichtungen eingesetzt werden.

Bevorzugt ist eine erfindungsgemäße Vorrichtung wie vorstehend beschrieben oder wie vorstehend als bevorzugt beschrieben, wobei die Ein- und/oder Ausgangsöffnungen der Aussparungen in der Stempeleinheit mittels Schließeinheiten geöffnet und geschlossen werden können, wobei bevorzugt eine Steuerungseinheit das Schließen und Öffnen der Eingangsöffnungen unabhängig von dem Schließen und Öffnen der Ausgangsöffnungen der Aussparungen der Stempeleinheit steuern kann.

Ein Vorteil des vorstehend beschriebenen Aspekts der vorliegenden Erfindung ist, dass Füllstoff in die erste Mischkammer überführt werden kann, ohne dass jemals ein räumlich Verbindung zwischen der ersten Mischkammer und dem Beschickungsschacht entsteht. Die räumliche Verbindung zwischen der ersten Mischkammer und dem Beschickungsschacht würde zu einem ungewollten Druckausgleich führen und somit potenziell Füllstoff aus der ersten Mischkammer entfernen.

Bevorzugt ist eine erfindungsgemäße Vorrichtung wie vorstehend beschrieben oder wie vorstehend als bevorzugt beschrieben, wobei
- die Vorrichtung mindestens einen Drucksensor umfasst, wobei der Drucksensor dazu eingerichtet ist, den Innendruck in der ersten Mischkammer zu messen, und/oder
- die Stempeleinheit mindestens einen Druckbegrenzungsmittel zum Entlüften der ersten Mischkammer aufweist. Ein solches Druckbegrenzungsmittel ist beispielsweise ein herkömmliches Druckbegrenzungsventil oder eine nachstehend beschriebene Rotationseinheit mit oder ohne Auffangkomponente.

Ein Vorteil des vorstehend beschriebenen Aspekts der vorliegenden Erfindung ist, dass mithilfe der vorstehend beschriebene Stempeleinheit und des vorstehend beschriebenen Drucksensors der Innendruck der ersten Mischkammer leichter an den Innendruck des Beschickungsschachtes angepasst werden kann. Dies verringert die Gefahr einer Staubexplosion, welche bei einem vorstehend beschriebenen Stempel besonders hoch ist.

Bevorzugt ist eine erfindungsgemäße Vorrichtung wie vorstehend beschrieben oder wie vorstehend als bevorzugt beschrieben, wobei die Stempeleinheit Beförderungsmittel zum Befördern von Füllstoffen aus den Aussparungen der Stempeleinheit, umfasst, wobei die Beförderungsmittel eine Ausstoßkolben und/oder eine Druckluftventile zum Erzeugen eines von der Eingangsöffnung zur Ausgangsöffnung der Aussparungen gerichteten Druckluftstromes in den Aussparungen der Stempeleinheit aufweisen. Bevorzugt ist es hier, wenn die Ausstoßkolben oder die Druckventile nicht genau gegenüberliegend, sondern leicht versetzt an der Innenwand der Aussparung angebracht sind, sodass ein Ausstoßkolben oder ein Druckventil Druckluft auf einen gegenüberliegenden Innenwandabschnitt und nicht auf einen anderen Ausstoßkolben oder ein Druckventil richtet.

Ein Vorteil des vorstehend beschriebenen Aspekts der vorliegenden Erfindung ist, dass auf diese Weise ein Wirbelbett erzeugt werden kann und somit ein vollständiges Überführen der Füllstoffe durch die eine oder die mehreren Aussparungen der Stempeleinheit einer erfindungsgemäßen Vorrichtung ermöglicht werden kann.

Bevorzugt ist eine erfindungsgemäße Vorrichtung wie vorstehend beschrieben oder wie vorstehend als bevorzugt beschrieben, wobei die Stempeleinheit eine drehbare Rotationeinheit mit Auffangkomponenten umfasst, wobei die Auffangkomponenten so ausgebildet sind, dass sie durch die Eingangsöffnung der Aussparungen der Stempeleinheit Füllstoffe aufnehmen können und nach einer Drehung der Rotationeinheit die besagten aufgenommen Füllstoffe durch die Ausgangsöffnungen der Aussparungen der Stempeleinheit in die erste Mischkammer überführt werden können. Die besagten Auffangkomponenten könnten tassenförmig ausgebildet sein.

Ein Vorteil des vorstehend beschriebenen Aspekts der vorliegenden Erfindung ist, dass auch mit solchen Auffangkomponenten Füllstoffe in die erste Mischkammer überführt werden kann, ohne dass jemals ein räumlich Verbindung zwischen der ersten Mischkammer und dem Beschickungsschacht entsteht. Es gilt das zuvor Gesagte zur räumlichen Verbindung.

Bevorzugt ist eine erfindungsgemäße Vorrichtung wie vorstehend beschrieben oder wie vorstehend als bevorzugt beschrieben, wobei die Vorrichtung eine zweite Mischkammer aufweist, welche unterhalb der ersten Mischkammer angeordnet ist, wobei die zweite Mischkammer von einem Kammergehäuse, einer Einwurföffnung und einer Auswurfsöffnung begrenzt wird und einen, zwei oder mehr als zwei Rotoren zum Mischen einer Kautschukmischung innerhalb der zweiten Mischkammer aufweist, wobei ein zweiter Beschickungsschacht zum Beschicken der zweiten Mischkammer aus der ersten Mischkammer bevorzugt zwischen der Auswurfsöffnung der ersten Mischkammer und der Einwurföffnung der zweiten Mischkammer angeordnet ist.

Die vorstehend beschriebenen vorteilhaften Aspekte einer erfindungsgemäßen Vorrichtung zum Mischen von Kautschukmischungen gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte einer erfindungsgemäßen Vorrichtung zum Mischen von Kautschukmischungen.

Die Erfindung betrifft auch ein Verfahren zum Mischen von Kautschukmischungen, umfassen die folgenden Schritte:
A) Herstellen oder Bereitstellen von mindestens einem Kautschuk und mindestens einem Füllstoff,
B) Bereitstellen von Vorrichtung wie vorstehend beschrieben oder wie vorstehend als bevorzugt beschrieben,
C) Zuführen des mindestens einen Kautschuks in die erste Mischkammer der Vorrichtung,
D) Herunterfahren der Stempeleinheit innerhalb des Beschickungsschachts der Vorrichtung, bevorzugt soweit, dass die unteren Kanten der Stempeleinheit unterhalb der mindestens einen Beschickungsöffnung des Beschickungsschachts angeordnet sind,
E) Zuführen zumindest eines des mindestens einen Füllstoffs durch die Aussparungen der in Schritt D) heruntergefahrenen Stempeleinheit hindurch in die erste Mischkammer, bevorzugt wird jedoch die gesamte Mange an Füllstoffen zugeführt,
F) Optionales Zuführen der restlichen Füllstoffe des mindestens einen Füllstoffs und
G) Mischen des mindestens einen Kautschuks und des mindestens einen Füllstoffs in der ersten Mischkammer mit den optional zugeführten restlichen Füllstoffen, sodass eine Kautschukmischung entsteht.

Bevorzugt ist ein erfindungsgemäßes Verfahren wie vorstehend beschrieben oder wie vorstehend als bevorzugt beschrieben, wobei während Schritt E) die Stempeleinheit nach oben gefahren wird, bevorzugt jedoch nicht so hoch, dass die unteren Kanten der Stempeleinheit oberhalb der mindestens einen Beschickungsöffnung des Beschickungsschachts gefahren werden.

Ein Vorteil des vorstehend beschriebenen Aspekts der vorliegenden Erfindung ist, dass durch das Hochfahren des Stempels ein Unterdruck in der ersten Mischkammer erzeugt wird und somit der Füllstoff automatisch durch die Aussparung der Stempeleinheit in die erste Mischkammer gezogen wird. Dies ermöglicht es auf recht einfache verfahrenstechnische Weise, den Verlust von Füllstoff beim Zuführen in eine Mischkammer zu verhindern.

Die vorstehend beschriebenen vorteilhaften Aspekte einer erfindungsgemäßen Vorrichtung zum Mischen von Kautschukmischungen und eines erfindungsgemäßen Verfahrens zum Mischen von Kautschukmischungen gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vorrichtung zum Mischen von Kautschukmischungen und eines erfindungsgemäßen Verfahrens zum Mischen von Kautschukmischungen.

Die Erfindung betrifft auch eine Verwendung einer der vorstehend beschriebenen Stempeleinheiten
- zum Beschicken von Füllstoffen in eine Mischkammer einer vorstehend beschriebenen oder wie vorstehend als bevorzugt beschriebenen Vorrichtung oder in einer Vorrichtung zur Durchführung eines vorstehend beschriebenen oder wie vorstehend als bevorzugt beschriebenen Verfahrens,
bevorzugt während die Stempeleinheit von der Mischkammer der Vorrichtung wegbewegt wird und/oder während die Stempeleinheit in der Vorrichtung vertikal nach oben verschoben wird.

Die Erfindung betrifft auch eine Verwendung einer Vorrichtung wie vorstehend beschrieben oder wie vorstehend als bevorzugt beschrieben oder einer Vorrichtung zur Durchführung eines Verfahrens wie vorstehend beschrieben oder wie vorstehend als bevorzugt beschrieben zur Herstellung von Kautschukmischungen.

### Figurenbeschreibung:

Es zeigt:
- Figur 1:: Eine Querschnittsansicht auf eine erfindungsgemäße Vorrichtung zum Mischen von Kautschukmischungen;
- Figur 2:: Ausschnitt der Vorrichtung gemäß der Ausführungsform aus Figur 1, wobei lediglich der Teil der Vorrichtung, welche um die Stempeleinheit angeordnet ist, dargestellt ist, wobei die zwei drehbaren Rotationeinheiten 23, 24 geöffnet sind;
- Figur 3:: Ausschnitt der Vorrichtung gemäß der Ausführungsform aus Figur 1, wobei lediglich der Teil der Vorrichtung, welche um die Stempeleinheit angeordnet ist, dargestellt ist, wobei die zwei drehbaren Rotationeinheiten 23, 24 geschlossen sind;
- Figur 4:: Ausschnitt einer erfindungsgemäßen Vorrichtung gemäß einer weiteren Ausführungsform, wobei lediglich der Teil der Vorrichtung dargestellt ist, welche um die Stempeleinheit 8 mit nur einer drehbare Rotationeinheit 28 mit einer Auffangkomponente 29 angeordnet ist.

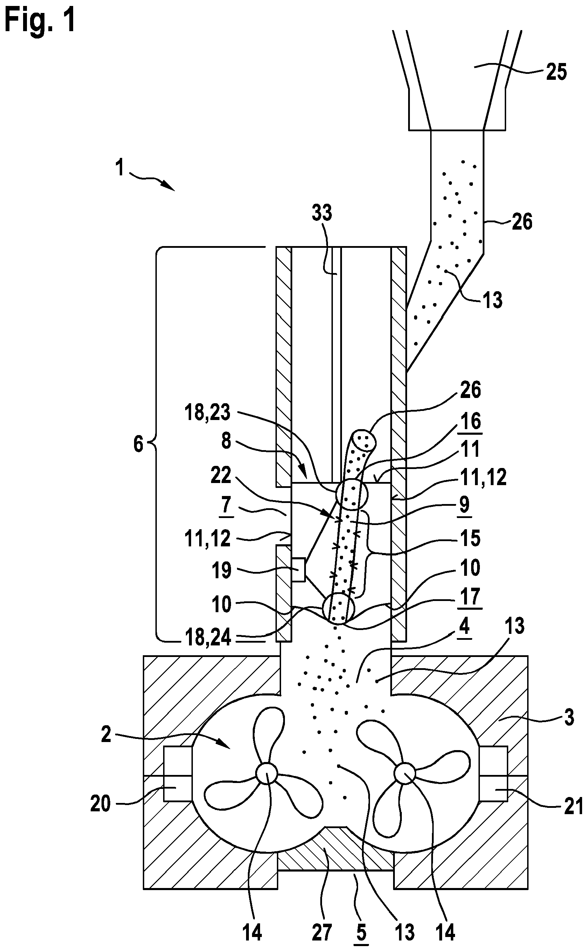

Figur 1 zeigt eine schematische Darstellung einer Vorrichtung 1 zum Mischen von Kautschukmischungen, umfassend
- zumindest eine erste Mischkammer 2 der einen oder mehr als einen Mischkammern der Vorrichtung 1, wobei die erste Mischkammer 2 von einem Kammergehäuse 3, einer Einwurföffnung 4 und einer Auswurfsöffnung 5 begrenzt wird,
- einen Beschickungsschacht 6 zum Beschicken der ersten Mischkammer 2, wobei der Beschickungsschacht 6 mindestens eine Beschickungsöffnung 7 zum Beschicken von Kautschukmischungsbestandteilen aufweist,
und
- eine Stempeleinheit 8 zum Schließen der ersten Einwurföffnung 4, wobei die Stempeleinheit 8 verschiebbar innerhalb des Beschickungsschachtes 6 angeordnet ist,
dadurch gekennzeichnet, dass
die Stempeleinheit 8 eine Aussparung 9 aufweist, wobei die eine Aussparung 9 dazu eingerichtet ist, dass durch die Aussparung 9 hindurch Füllstoffe 13 in die erste Mischkammer 2 überführt werden können, während die unteren Kanten 10 der Stempeleinheit 8 unterhalb der mindestens einen Beschickungsöffnung 7 des Beschickungsschachts 6 angeordnet sind,
wobei
- die eine Aussparung 9 dazu eingerichtet sind, dass durch die Aussparung 9 hindurch Füllstoffe 13 in die erste Mischkammer 2überführt werden können, während die Stempeleinheit 8 die Einwurföffnung 4 der ersten Mischkammer 2 schließt,
- die eine Aussparung 9 ein Durchgangsloch ist und die Stempeleinheit 8 mehrere planare Wandflächen 11 aufweist, wobei die vier Seitenwände 12 der planaren Wandflächen 11 der Stempeleinheit 8 planar sind,
- die eine Aussparung 9 eine Eingangsöffnung16 und eine Ausgangsöffnung 17 aufweisen, wobei die Eingangsöffnung 16 einer jeden Aussparung 9 an der der ersten Mischkammer 2 abgewandten Wandfläche 11 der Stempeleinheit 8 angeordnet ist und die eine Ausgangsöffnung 17 der Aussparung 9 an der der ersten Mischkammer 2 zugewandten Wandfläche 11 der Stempeleinheit 8 angeordnet ist,
- die eine Aussparung 9 der Stempeleinheit 8 mindestens eine Kammer 15 zum vorübergehenden Auffangen von Füllstoffen 13 umfasst,
- die Ein- und Ausgangsöffnung 15, 16 der Aussparung 9 in der Stempeleinheit 8 mittels Schließeinheiten 18 geöffnet und geschlossen werden können, wobei eine Steuerungseinheit 19 das Schließen und Öffnen der Eingangsöffnung 15 unabhängig von dem Schließen und Öffnen der Ausgangsöffnung 16 der Aussparungen 9 der Stempeleinheit 8 steuern kann,
- die Vorrichtung 1 mindestens einen Drucksensor 20 umfasst, wobei der Drucksensor 20 dazu eingerichtet ist, den Innendruck in der ersten Mischkammer 2 zu messen,
- die Stempeleinheit 8 mindestens ein Druckbegrenzungsmittel 21 zum Entlüften der ersten Mischkammer 2 aufweist,
- die Stempeleinheit 8 Beförderungsmittel 22 zum Befördern von Füllstoffen 13 aus der Aussparung 9 der Stempeleinheit 8 und zur Erzeugung eines Wirbelbetts umfasst, wobei die Beförderungsmittel 22 mindestens ein Druckluftventil zum Erzeugen eines von der Eingangsöffnung 16 zur Ausgangsöffnung 17 der Aussparungen 9 gerichteten Druckluftstromes aufweisen
und
- die Stempeleinheit 8 zwei drehbare Rotationeinheit 23, 24 mit Auffangkomponenten umfasst, wobei die Auffangkomponenten so ausgebildet sind, dass sie durch die Eingangsöffnung 15 der Aussparungen 9 der Stempeleinheit 8 Füllstoffe 13 aufnehmen können und nach einer Drehung einer Rotationeinheit 23, 24 die besagten aufgenommen Füllstoffe 13 durch die Ausgangsöffnungen 17 der Aussparungen 9 der Stempeleinheit 8 in die erste Mischkammer 2 überführt werden können.

Zudem ist in Figur 1 die Pleuelstange 33 der Stempeleinheit 8, der Vorratsbehälter 25 mit Füllstoff 13 und dessen Verbindungsleitung 26 vom Vorratsbehälter 25 zur Stempeleinheit 8 dargestellt.

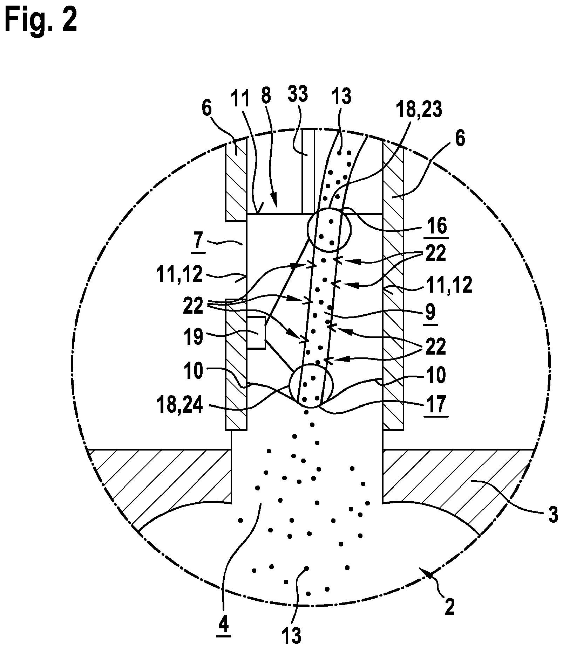

Figur 2 zeigt eine schematische Darstellung eines Ausschnittes der Vorrichtung 1 gemäß der Ausführungsform aus Figur 1, wobei lediglich der Teil der Vorrichtung 1, welche um die Stempeleinheit 8 angeordnet ist, dargestellt ist. In Figur 2 sind die zwei drehbaren Rotationeinheiten 23, 24 geöffnet, sodass eine räumlich Verbindung im Sinne der vorliegenden Erfindung zwischen der ersten Mischkammer 2 und dem Innenraum des Beschickungsschachtes 6 besteht und Füllstoff 13 von durch die Aussparung 9 und durch die Einwurföffnung 4 in die erste Mischkammer 2 überführt werden kann. Hierbei sind die beiden Rotationseinheiten an der Eingangsöffnung 16 und an der Ausgangsöffnung 17 der Aussparung 9 geöffnet. Die beiden Rotationseinheiten 23, 24 können dabei über die Steuereinheit 19 unabhängig voneinander geöffnet und geschlossen werden. In Figur 2 ist zudem zu sehen, wie die Druckventile 22 in der Aussparung 9 angeordnet sind um ein Wirbelbett in der Aussparung 9 zu erzeugen und Füllstoff 13 in die erste Mischkammer 2 zu überführen, während die untere Kante 10 der Stempeleinheit 8 unterhalb der einen Beschickungsöffnung 7 ist. Bevorzugt ist es, wenn die Stempeleinheit 8 während des Zuführens des Füllstoffes 13 wie in Figur 2 gezeigt im Beschickungsschacht 6 nach oben gefahren wird, umso einen Unterdruck in der ersten Mischkammer 2 zu erzeugen. Zudem ist in Figur 2 die Pleuelstange 33 der Stempeleinheit 8 dargestellt.

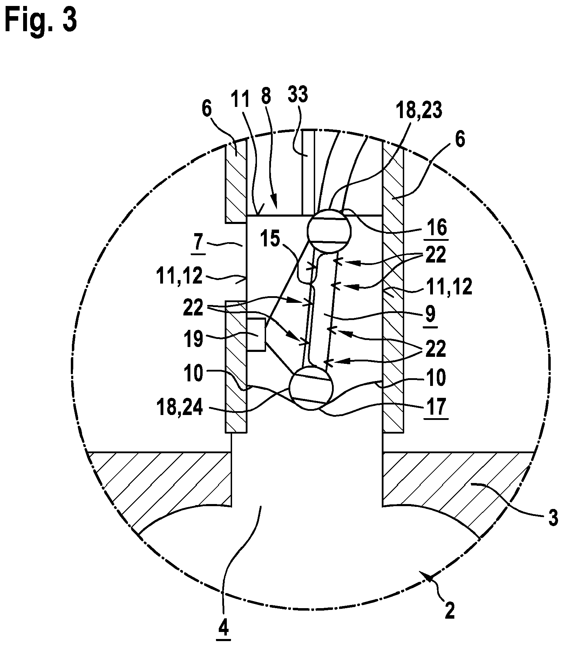

Figur 3 zeigt eine schematische Darstellung eines Ausschnittes der Vorrichtung 1 gemäß der Ausführungsform aus Figur 1, wobei lediglich der Teil der Vorrichtung 1, welche um die Stempeleinheit 8 angeordnet ist, dargestellt ist. In Figur 3 sind die zwei drehbaren Rotationeinheiten 23, 24 geschlossen, sodass eine räumlich Verbindung im Sinne der vorliegenden Erfindung zwischen der ersten Mischkammer 2 und dem Innenraum des Beschickungsschachtes 6 besteht und die erste Mischkammer 2 somit hermetisch abschließen. Für Letzteres ist zudem nötig, dass die untere Kante 10 der Stempeleinheit 8 unterhalb der einen Beschickungsöffnung 7 ist. Zudem ist in Figur 3 die Pleuelstange 33 der Stempeleinheit 8 dargestellt.

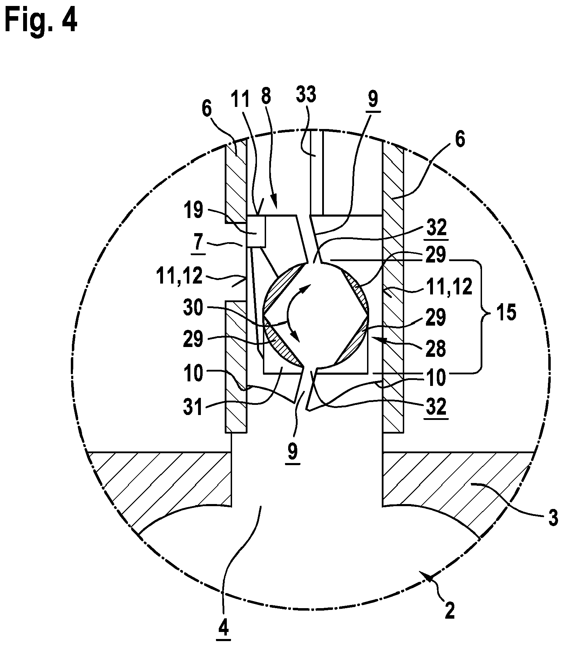

Figur 4 zeigt eine schematische Darstellung eines Ausschnittes der Vorrichtung 1 gemäß der Ausführung einer weiteren Ausführungsform, wobei lediglich der Teil der Vorrichtung, welche um die Stempeleinheit 8 angeordnet ist, dargestellt ist. In Figur 4 ist eine Stempeleinheit 8 mit einer einzigen drehbaren Rotationseinheit 28 mit einer Auffangkomponenten 29 schematisch dargestellt. Die besagte drehbare Rotationseinheit 28 ist dabei innerhalb der Wiegekammer 15 der Aussparung 9 der Stempeleinheit 8 angeordnet. Die Wiegekammer 15 umfasst eine Waage 31, die Messignale an die Steuereinheit 19 senden kann. Die Steuereinheit 19 kann zudem die Auffangkomponenten 29 innerhalb der Rotationseinheit 28 rotieren, sodass nur eine oder beide der asymmetrischen Öffnungen 32 der Auffangkomponente 29 geschlossen oder geöffnet sind. Letzteres wird durch die asymmetrische Anordnung der beiden Öffnungen 32 in der Auffangkomponenten 29 sichergestellt. Dadurch dass die Auffangkomponente 29 in die Rotationsrichtung 30 hin und her rotiert werden kann, ist es wie in Figur 4 gezeigt möglich, den Zugang zum oberen Teil der Aussparung 9 zu schließen und gelichzeitig den Zugang zum unteren Teil der Aussparung 9 offenzuhalten und *vice versa.* Dadurch dass die Steuereinheit 19 sowohl Messsignale der Waage 31 empfangen kann, als auch die Rotation der Auffangkomponenten 29 steuern bzw. regeln kann, ist es möglich, Füllstoffe sehr präzise und ohne Verlust in die erste Mischkammer 3 zu überführen. Zudem ist in Figur 4 die Pleuelstange 33 der Stempeleinheit 8 dargestellt.

### Bezugszeichenliste:

- 1: Vorrichtung zum Mischen von Kautschukmischungen
- 2: erste Mischkammer
- 3: Kammergehäuse
- 4: Einwurföffnung
- 5: Auswurfsöffnung
- 6: Beschickungsschacht zum Beschicken der ersten Mischkammer
- 7: Beschickungsöffnung des Beschickungsschachtes
- 8: Stempeleinheit zum Schließen der ersten Einwurföffnung
- 9: Aussparung in der Stempeleinheit 8; Durchgangsloch
- 10: unteren Kanten der Stempeleinheit
- 11: planare Wandflächen der Stempeleinheit
- 12: Seitenwand der Stempeleinheit
- 13: Füllstoffe
- 14: Rotoren der ersten Mischkammer
- 15: Kammer zum vorübergehenden Auffangen von Füllstoffen; Wiegekammer
- 16: Eingangsöffnung der Aussparung
- 17: Ausgangsöffnung der Aussparung
- 18: Schließeinheiten der Ein- und Ausgangsöffnung der Aussparung
- 19: Steuerungseinheit zum Schließen und Öffnen der Eingangsöffnung unabhängig von dem Schließen und Öffnen der Ausgangsöffnungen der Aussparungen
- 20: Drucksensor dazu eingerichtet, den Innendruck in der ersten Mischkammer zu messen
- 21: Druckbegrenzungsmittel zum Entlüften der ersten Mischkammer
- 22: Beförderungsmittel zum Befördern von Füllstoffen aus der Aussparung und zur Erzeugung eines Wirbelbetts; Druckluftventil zum Erzeugen eines von der Eingangsöffnung zur Ausgangsöffnung der Aussparungen gerichteten Druckluftstromes in den Aussparungen der Stempeleinheit
- 23: an der Eingangsöffnung der Aussparung angebrachte drehbare Rotationeinheit
- 24: an der Ausgangsöffnung der Aussparung angebrachte drehbare Rotationeinheit
- 25: Vorratsbehälter mit Füllstoff
- 26: Verbindungsleitung vom Vorratsbehälter 25 zur Stempeleinheit
- 27: Sattel der ersten Mischkammer
- 28: drehbare Rotationeinheit mit Auffangkomponente 29
- 29: Auffangkomponente einer in der Aussparung 9 angebrachte drehbaren Rotationeinheit
- 30: Rotationsrichtung der drehbaren Rotationeinheit 28 mit Auffangkomponente 29
- 31: Waage
- 32: asymmetrische Öffnungen der Auffangkomponente
- 33: Pleuelstange der Stempeleinheit

## Patentansprüche

1. Vorrichtung zum Mischen von Kautschukmischungen, umfassend
- zumindest eine erste Mischkammer (2) der einen oder mehr als einen Mischkammern der Vorrichtung (1), wobei die erste Mischkammer (2) von einem Kammergehäuse (3), einer Einwurföffnung (4) und einer Auswurfsöffnung (5) begrenzt wird,
- einen Beschickungsschacht (6) zum Beschicken der ersten Mischkammer (2), wobei der Beschickungsschacht (6) mindestens eine Beschickungsöffnung (7) zum Beschicken von Kautschukmischungsbestandteilen aufweist,
und
- eine Stempeleinheit (8) zum Schließen der Einwurföffnung (4), wobei die Stempeleinheit (8) verschiebbar innerhalb des Beschickungsschachts (6) angeordnet ist,
**dadurch gekennzeichnet, dass**
die Stempeleinheit (8) eine oder mehrere Aussparungen (9) aufweist, wobei die eine oder eine der mehreren Aussparungen (9) dazu eingerichtet sind, dass durch die Aussparungen (9) hindurch Füllstoffe (13) in die erste Mischkammer (2) überführt werden können, während die unteren Kanten (10) der Stempeleinheit (8) unterhalb der mindestens einen Beschickungsöffnung (7) des Beschickungsschachts (6) angeordnet sind.

2. Vorrichtung nach Anspruch 1, wobei
- die eine oder eine der mehreren Aussparungen (9) dazu eingerichtet sind, dass durch die Aussparungen (9) hindurch Füllstoffe (13) in die erste Mischkammer (2) überführt werden können, während die Stempeleinheit (8) die Einwurföffnung (4) der ersten Mischkammer (2) schließt
und/oder
- der Beschickungsschacht keine weiteren Öffnungen unterhalb der mindestens einen Beschickungsöffnung (7) aufweist.

3. Vorrichtung nach einem der vorangehenden Ansprüche, wobei die eine oder die mehreren Aussparungen (9) von der Ober- zur Unterwand der Stempeleinheit (8) durchgehende Durchgangslöcher sind und/oder die Stempeleinheit (8) mehrere planare Wandflächen (11) aufweist, wobei bevorzugt die Seitenwände (12) planar sind und besonders bevorzugt die Unterwand spiegelsymmetrisch ausgeformt ist.

4. Vorrichtung nach einem der vorangehenden Ansprüche, wobei die Vorrichtung (1) zusätzlich
- eine weitere unterhalb der ersten Mischkammer (2) angeordnete Mischkammer und/oder
- einen, zwei oder mehr als zwei Rotoren (14) zum Mischen einer Kautschukmischung innerhalb der ersten Mischkammer (2)
und/oder
- einen, zwei oder mehr als zwei Rotoren zum Mischen einer Kautschukmischung innerhalb einer der weiteren Mischkammern
umfasst.

5. Vorrichtung nach einem der vorangehenden Ansprüche, wobei die eine oder die mehreren Aussparungen (9) jeweils eine Eingangsöffnung (16) und jeweils mindestens eine Ausgangsöffnung (17) aufweisen, wobei die Eingangsöffnung (16) einer jeden Aussparung (9) bevorzugt an der der ersten Mischkammer (2) abgewandten Wandfläche (11) der Stempeleinheit (8) angeordnet ist und die mindestens eine Ausgangsöffnung (17) einer jeden Aussparung (9) besonders bevorzugt an der der ersten Mischkammer (2) zugewandten Wandfläche (11) der Stempeleinheit (8) angeordnet ist, wobei bevorzugt jede Aussparung (9)
- eine Schraube zum Befördern eines Füllstoffes (13) in die Mischkammer (2) und/oder
- ein Belüftungsmittel (22) zur Erzeugung eines Wirbelbetts
umfasst.

6. Vorrichtung nach einem der vorangehenden Ansprüche, wobei die eine Aussparung (9) oder die eine der mehrere Aussparungen (9) der Stempeleinheit (8) mindestens eine Kammer (15) zum vorübergehenden Auffangen von Füllstoffen (13) umfasst, wobei die besagte Kammer (15) bevorzugt eine Wiegekammer mit Waagen (31) zum Wiegen von Füllstoffen (13) ist, wobei jede Wiegekammern bevorzugt mit mindestens einer Eingangsöffnung (16) einer Aussparung (9) in der Stempeleinheit (8) verbunden ist und/oder Transportmittel umfasst, welche dazu eingerichtet sind, Füllstoffe (13) von der Wiegefläche einer Waage (31) einer Wiegekammer durch eine Aussparung (9) der Stempeleinheit (8) in die erste Mischkammer (2) zu transportieren.

7. Vorrichtung nach einem der vorangehenden Ansprüche, wobei die Ein- und/oder Ausgangsöffnungen (16, 17) der Aussparungen (9) in der Stempeleinheit (8) mittels Schließeinheiten geöffnet und geschlossen werden können, wobei bevorzugt eine Steuerungseinheit (19) das Schließen und Öffnen der Eingangsöffnungen (16) unabhängig von dem Schließen und Öffnen der Ausgangsöffnungen (17) der Aussparungen (9) der Stempeleinheit (8) steuern kann.

8. Vorrichtung nach einem der vorangehenden Ansprüche, wobei
- die Vorrichtung (1) mindestens einen Drucksensor (20) umfasst, wobei der Drucksensor (20) dazu eingerichtet ist, den Innendruck in der ersten Mischkammer (2) zu messen,
und/oder
- die Stempeleinheit (8) mindestens ein Druckbegrenzungsmittel (21) zum Entlüften der ersten Mischkammer (2) aufweist.

9. Vorrichtung nach einem der vorangehenden Ansprüche, wobei die Stempeleinheit (8) Beförderungsmittel (22) zum Befördern von Füllstoffen (13) aus den Aussparungen (9) der Stempeleinheit (8) umfasst, wobei die Beförderungsmittel (22) mindestens einen Ausstoßkolben und/oder mindestens ein Druckluftventil zum Erzeugen eines von der Eingangsöffnung (16) zur Ausgangsöffnung (17) der Aussparungen (9) gerichteten Druckluftstromes in den Aussparungen (9) der Stempeleinheit (8) aufweisen.

10. Vorrichtung nach einem der vorangehenden Ansprüche, wobei die Stempeleinheit (8) mindestens eine drehbare Rotationeinheit (23, 24, 28) umfasst, wobei die drehbare Rotationeinheit (28) bevorzugt mindestens eine Auffangkomponente (29) aufweist und die eine Auffangkomponente (29) besonders bevorzugt so ausgebildet ist, dass sie durch die Eingangsöffnung (16) der Aussparungen (9) der Stempeleinheit (8) Füllstoffe (13) aufnehmen können und nach einer Drehung der Rotationeinheit (28) die besagten aufgenommen Füllstoffe (13) durch die Ausgangsöffnungen (17) der Aussparungen (9) der Stempeleinheit (8) in die erste Mischkammer (2) überführt werden können.

11. Vorrichtung nach einem der vorangehenden Ansprüche, wobei die Vorrichtung (1) eine zweite Mischkammer aufweist, welche unterhalb der ersten Mischkammer (2) angeordnet ist, wobei die zweite Mischkammer von einem Kammergehäuse, einer Einwurföffnung und einer Auswurfsöffnung begrenzt wird und einen, zwei oder mehr als zwei Rotoren zum Mischen einer Kautschukmischung innerhalb der zweiten Mischkammer aufweist, wobei ein zweiter Beschickungsschacht (6) zum Beschicken der zweiten Mischkammer aus der ersten Mischkammer (2) bevorzugt zwischen der Auswurfsöffnung (5) der ersten Mischkammer (2) und der Einwurföffnung der zweiten Mischkammer angeordnet ist.

12. Verfahren zum Mischen von Kautschukmischungen, umfassen die folgenden Schritte:
A) Herstellen oder Bereitstellen von mindestens einem Kautschuk und mindestens einem Füllstoff (13),
B) Bereitstellen von Vorrichtung (1) nach einem der vorangehenden Ansprüche 1 bis 11,
C) Zuführen des mindestens einen Kautschuks in die erste Mischkammer (2) der Vorrichtung (1),
D) Herunterfahren der Stempeleinheit (8) innerhalb des Beschickungsschachts (6) der Vorrichtung (1), bevorzugt soweit, dass die unteren Kanten (10) der Stempeleinheit (8) unterhalb der mindestens einen Beschickungsöffnung (7) des Beschickungsschachts (6) angeordnet sind,
E) Zuführen zumindest eines des mindestens einen Füllstoffs (13) durch die Aussparungen (9) der in Schritt D) heruntergefahrenen Stempeleinheit (8) hindurch in die erste Mischkammer (2), bevorzugt wird jedoch die gesamte Mange an Füllstoffen (13) zugeführt,
F) Optionales Zuführen der restlichen Füllstoffe (13) des mindestens einen Füllstoffs (13)
und
G) Mischen des mindestens einen Kautschuks und des mindestens einen Füllstoffs (13) in der ersten Mischkammer (2) mit den optional zugeführten restlichen Füllstoffen (13), sodass eine Kautschukmischung entsteht.

13. Verfahren nach Anspruch 12, wobei während Schritt E) die Stempeleinheit (8) nach oben gefahren wird, bevorzugt jedoch nicht so hoch, dass die unteren Kanten (10) der Stempeleinheit (8) oberhalb der mindestens einen Beschickungsöffnung (7) des Beschickungsschachts (6) gefahren werden.

14. Verwendung einer Stempeleinheit (8) wie in einem der vorangehenden Ansprüche definiert zum Beschicken von Füllstoffen (13) in eine Mischkammer (2) einer Vorrichtung nach einem der Ansprüche 1 bis 11 oder in einer Vorrichtung zur Durchführung eines Verfahrens nach dem Anspruch 12 oder Anspruch 13, bevorzugt während die Stempeleinheit (8) von der Mischkammer (2) der Vorrichtung (1) wegbewegt wird und/oder während die Stempeleinheit (8) in der Vorrichtung (1) vertikal nach oben verschoben wird.

15. Verwendung einer Vorrichtung nach einem der Ansprüche 1 bis 11 oder einer Vorrichtung zur Durchführung eines Verfahrens nach dem Anspruch 12 oder Anspruch 13 zur Herstellung von Kautschukmischungen.
